# EUROPÄISCHE PATENTANMELDUNG

(11) **EP 4 344 969 A1**
(43) Veröffentlichungstag der Anmeldung: **03.04.2024**
(21) Anmeldenummer: 23197584.8
(22) Anmeldetag: 15.09.2023
(51) Int. Cl.: B60T 8/17, B60T 8/32

(54) **REDUKTIONSBERECHNUNGSVERFAHREN**

(30) Priorität: 29.09.2022 DE 102022210316
(71) Anmelder: Siemens Mobility GmbH, 81739 München (DE)
(72) Erfinder: Knoll, Markus, 96172 Mühlhausen (DE)
(74) Vertreter: Siemens Patent Attorneys

(57) **Zusammenfassung**

Die Erfindung bezieht sich unter anderem auf ein Reduktionsberechnungsverfahren zum Ermitteln einer Reduktionsangabe (Ri), die eine einzustellende Kraftreduktion der Brems- oder Antriebskraft einer Brems- oder Antriebseinheit (31-i) eines Schienenfahrzeugs (30) während eines realen oder simulierten Fahrbetriebs beschreibt. Erfindungsgemäß ist bezüglich des Reduktionsberechnungsverfahrens vorgesehen, dass die Ermittlung der Reduktionsangabe (Ri) von einem angelernten Reduktionsermittlungssystem (11) künstlicher Intelligenz durchgeführt wird, das während des realen oder simulierten Fahrbetriebs die Reduktionsangabe (Ri) zumindest unter Einbezug des zeitlichen Verlaufs einer Achsdrehzahlangabe (Vi), die die Achsdrehzahl einer Achse, die von der jeweiligen Brems- oder Antriebseinheit (31-i) gebremst oder angetrieben wird, beschreibt, wobei das Reduktionsermittlungssystem (11) künstlicher Intelligenz unter Heranziehung simulierter und/oder gemessener Fahrverläufe (FV) und zugehöriger Achsdrehzahlverläufe trainiert worden ist.

## Beschreibung

Die Erfindung bezieht sich auf Reduktionsberechnungsverfahren und Modifikationsverfahren dafür, Reduktionsberechnungseinrichtungen, Modifikationseinrichtungen dafür, entsprechende Computerprogrammprodukte und entsprechende Fahrzeugsteuergeräte für Schienenfahrzeuge.

Im Bereich der Eisenbahntechnik werden bei Schienenfahrzeugen Gleit- und Schleuderschutzeinrichtungen eingesetzt, die bekanntermaßen zu den komplexesten Funktionen in der Brems- bzw. Antriebssteuerung von Schienenfahrzeugen gehören. Die Gleit- und Schleuderschutzeinrichtungen dienen dazu, bei schlechten Haftwertverhältnissen (z. B. nasser Schiene, Laub auf Schiene) durch Wegnehmen von Brems- bzw. Antriebskräften Radstillstände bzw. ein Durchdrehen der Räder zu vermeiden, bei - so ist zumindest das Ziel - gleichzeitiger Erhaltung einer Mindestbrems- bzw. -Traktionskraft. Bei schlechten Haftwertverhältnissen können jedoch die Achsdrehzahlen je nach Witterungsbedingung teilweise sehr stark von der realen Fahrzeuggeschwindigkeit abweichen. Daher steht auf deren Basis oft keine exakte Fahrzeuggeschwindigkeit zur Verfügung, um ein einfaches Regeln auf einen vorgegebenen Schlupf zu ermöglichen. Abgesehen davon ist es zur Minimierung beispielsweise der Bremswegverlängerung auch nicht immer zielführend, auf einen festen Schlupf zu regeln, sondern es sollte der Schlupf gefunden werden, bei welchem abhängig von den temporär vorliegenden Schienenverhältnissen die maximale Haftwertausnutzung möglich ist.

Der Erfindung liegt die Aufgabe zugrunde, ein einfach und schnell durchführbares Reduktionsberechnungsverfahren anzugeben, beispielsweise für den Einsatz in einem Gleit- und Schleuderschutz, das sich zum Ermitteln einer Reduktionsangabe, die eine Kraftreduktion der Brems- oder Antriebskraft einer Brems- oder Antriebseinheit eines Schienenfahrzeugs während eines Fahrbetriebs beschreibt, eignet.

Diese Aufgabe wird erfindungsgemäß durch ein Reduktionsberechnungsverfahren mit den Merkmalen gemäß Patentanspruch 1 gelöst. Vorteilhafte Ausgestaltungen des erfindungsgemäßen Reduktionsberechnungsverfahrens sind in Unteransprüchen angegeben.

Danach ist erfindungsgemäß vorgesehen, dass die Ermittlung der Reduktionsangabe von einem angelernten Reduktionsermittlungssystem künstlicher Intelligenz durchgeführt wird, das während des realen oder simulierten Fahrbetriebs die Reduktionsangabe zumindest unter Einbezug des zeitlichen Verlaufs einer Achsdrehzahlangabe, die die Achsdrehzahl einer Achse, die von der jeweiligen Brems- oder Antriebseinheit gebremst oder angetrieben wird, beschreibt, wobei das Reduktionsermittlungssystem künstlicher Intelligenz unter Heranziehung simulierter und/oder gemessener Fahrverläufe und zugehöriger Achsdrehzahlverläufe trainiert worden ist.

Ein wesentlicher Vorteil des erfindungsgemäßen Reduktionsberechnungsverfahrens ist darin zu sehen, dass dieses erfindungsgemäß auf einem System künstlicher Intelligenz basiert. Beispielsweise im Falle eines Einsatzes des Reduktionsberechnungsverfahrens in einem Gleit- und Schleuderschutz kann durch die künstliche Intelligenz - bei den gleichen Eingangsgrößen wie bei vorbekannten Gleit- und Schleuderschutzverfahren, die auf manuell implementierten Algorithmen auf der Basis von Expertenwissen basieren - ein deutlich besseres Fahrverhalten des Schienenfahrzeugs erreicht werden als bei den vorbekannten Gleit- und Schleuderschutzverfahren.

Ein weiterer wesentlicher Vorteil des erfindungsgemäßen Reduktionsberechnungsverfahrens besteht darin, dass dessen künstliche Intelligenz anhand von weiteren Betriebsdaten oder weiteren Simulationsdaten immer weiter trainiert werden kann, ohne dass eine manuelle menschliche Detailanalyse der zur Verfügung stehenden Fahrverläufe erfolgen muss.

Die Kraftreduktion der Bremskraft, deren Umfang durch die Reduktionsangabe definiert wird, kann beispielsweise bei druckluftbetriebenen Bremsen bzw. pneumatischen Bremsen technisch umgesetzt werden, indem bei den betroffenen Bremseinheiten der Bremsdruck durch eine bremseinheitsindividuelle Druckreduktion bzw. Entlüftung der Bremsdruckleitung reduziert wird.

Die Kraftreduktion der Antriebkraft, deren Umfang durch die Reduktionsangabe definiert wird, kann beispielsweise technisch umgesetzt werden, indem bei den betroffenen Antriebseinheiten das Antriebsdrehmoment in dem durch die Reduktionsangabe definierten Maße erniedrigt wird.

Vorteilhaft ist es, wenn das Reduktionsermittlungssystem künstlicher Intelligenz trainiert worden ist unter der Maßgabe, dass bei einem Bremsvorgang eine Bremswegverlängerung des Schienenfahrzeugs, verglichen mit einem gemessenen oder simulierten Bremsweg bei trockener Schiene, einen vorgegebenen bremsbezogenen Verlängerungsmaximalwert unterschreitet.

Auch ist es von Vorteil, wenn das Reduktionsermittlungssystem künstlicher Intelligenz trainiert worden ist unter der Maßgabe, dass bei einem Beschleunigungsvorgang eine Verlängerung der Beschleunigungsdauer des Schienenfahrzeugs, verglichen mit einer gemessenen oder simulierten Beschleunigungsdauer bei trockener Schiene, eine vorgegebene beschleunigungsbezogene Maximaldauer unterschreitet.

Unabhängig davon, ob es sich um einen Beschleunigungsvorgang oder Bremsvorgang handelt, ist es vorteilhaft, wenn das Reduktionsermittlungssystem künstlicher Intelligenz trainiert worden ist unter der Maßgabe, dass ein vorgegebener vorzugsweise geschwindigkeitsabhängiger Radschlupf unterschritten wird. Der Radschlupf kann beispielsweise auf der Basis der Differenz zwischen der aus der Achsdrehzahl ermittelbaren, sogenannten Achsgeschwindigkeit und der realen Fahrzeuggeschwindigkeit ermittelt werden.

Ein besonders gutes Fahrverhalten lässt sich erreichen, wenn das Reduktionsermittlungssystem künstlicher Intelligenz unter weiterer Heranziehung der Fahrzeuggeschwindigkeit des Schienenfahrzeugs während der simulierten und/oder gemessenen Fahrverläufe trainiert worden ist und die Ermittlung der Reduktionsangabe auch unter Einbezug des zeitlichen Verlaufs der aktuellen Fahrzeuggeschwindigkeit erfolgt.

Als besonders vorteilhaft wird es angesehen, wenn dem angelernten Reduktionsermittlungssystem eine Prüfeinrichtung nachgeordnet ist, die die ermittelte Reduktionsangabe einer Plausibilitätsprüfung unterwirft, wobei die Prüfeinrichtung die Reduktionsangabe unverändert ausgibt, wenn diese die Plausibilitätsprüfung besteht, und andernfalls die Reduktionsangabe korrigiert und eine korrigierte Reduktionsangabe ausgibt oder die Ausgabe der Reduktionsangabe blockiert.

Ein Vorteil der letztgenannten Ausgestaltung ist darin zu sehen, dass diese zumindest zweistufig ausgeführt ist. Eine erste Stufe wird durch das Reduktionsermittlungssystem, also das angelernte System künstlicher Intelligenz gebildet, das anhand von Messwerten die Reduktionsangabe bzw. die Reduktionsangaben errechnet. Die Genauigkeit bzw. die Sicherheit der von der ersten Stufe erzeugten Reduktionsangaben kann jedoch unter Umständen über ein zulässiges Maß hinaus ungewiss oder sogar fehlerbehaftet sein, beispielsweise wenn eine zuvor noch nicht ausreichend trainierte Rad-Schiene-Haftsituation in Kombination mit einem Eingriff einer Gleit- und Schleuderschutzregelung auftritt. Aus diesem Grunde ist die erwähnte zweite Stufe in Form der Prüfeinrichtung von Vorteil, die die Reduktionsangaben der ersten Stufe auf Plausibilität prüfen kann. Die zweite Stufe ermöglicht es somit, das Gesamtsystem bzw. das KI-gestützte Verfahren zur Ermittlung der Reduktionsangaben insgesamt ohne großen Aufwand auf ein besonders hohes Sicherheitsniveau zu bringen.

Alternativ oder zusätzlich kann in vorteilhafter Weise vorgesehen sein, dass dem angelernten Reduktionsermittlungssystem eine Prüfeinrichtung nachgeordnet ist, die die Ausgabe der Reduktionsangabe blockiert, wenn gute Haftwertbedingungen erkannt werden und/oder wenn alle Achsen dieselbe Fahrzeuggeschwindigkeit (von Toleranzen abgesehen) anzeigen oder mit einer extern bestimmten Fahrzeuggeschwindigkeitsangabe in einem vorgegebenen Maße übereinstimmen.

Die Erfindung bezieht sich außerdem auf ein Modifikationsverfahren zum Modifizieren eines Reduktionsberechnungsverfahrens, wie es oben beschrieben worden ist. Erfindungsgemäß ist bezüglich eines solchen Modifikationsverfahrens vorgesehen, dass ein Fahrverlauf, der auf der Basis einer Reduktionsangabe, die nach einem Reduktionsberechnungsverfahren wie oben beschrieben ermittelt worden ist, simuliert oder real durchgeführt worden ist, hinsichtlich zumindest einer Verlaufsangabe ausgewertet wird, die zumindest eine Verlaufsangabe mit einer zugeordneten Referenzangabe verglichen wird und in Abhängigkeit vom Ergebnis des Vergleichs das Reduktionsberechnungsverfahren und/oder das Modifikationsverfahren modifiziert wird oder eine Modifikation unterbleibt.

Wenn der Fahrverlauf ein Bremsverlauf ist, ist es vorteilhaft, wenn
- die oder eine der Verlaufsangaben eine Bremswegverlängerungsangabe ist und eine simulierte oder real aufgetretene Bremswegverlängerung gegenüber einem gemessenen oder simulierten Bremsweg bei trockener Schiene beschreibt und die oder eine der Referenzangaben eine Referenzverlängerungsangabe ist, und/oder
- die oder eine der Verlaufsangaben eine Bremswegangabe ist und den simulierten oder real aufgetretenen Bremsweg beschreibt und die oder eine der Referenzangaben eine Referenzbremswegangabe ist, und/oder
- die oder eine der Verlaufsangaben eine vorzugsweise geschwindigkeitsabhängige Radschlupfangabe ist und die oder eine der Referenzangaben eine vorzugsweise geschwindigkeitsabhängige Referenzradschlupfangabe ist.

Wenn der Fahrverlauf ein Beschleunigungsverlauf ist, ist es vorteilhaft, wenn
- die oder eine der Verlaufsangaben eine Beschleunigungsdauerangabe ist und die simulierte oder real aufgetretene Beschleunigungsdauer beschreibt und die oder eine der Referenzangaben eine Referenzbeschleunigungsdauerangabe ist
   und/oder
- die oder eine der Verlaufsangaben eine Beschleunigungsdauerverlängerungsangabe ist und eine simulierte oder real aufgetretene Beschleunigungsdauerverlängerung gegenüber einer gemessenen oder simulierten Beschleunigungsdauer bei trockener Schiene beschreibt und die oder eine der Referenzangaben eine Referenzbeschleunigungsdauerverlängerungsangabe und/oder
- die oder eine der Verlaufsangaben eine vorzugsweise geschwindigkeitsabhängige Radschlupfangabe ist und die oder eine der Referenzangaben eine vorzugsweise geschwindigkeitsabhängige Referenzradschlupfangabe ist.

Eine Aktualisierung des Modifikationsverfahrens erfolgt vorzugsweise, wenn eine der Verlaufsangaben ihre zugeordnete Referenzangabe qualitativ übertrifft, wobei die Aktualisierung erfolgt, indem die aktuelle Verlaufsangabe als neue Referenzangabe festgelegt wird.

Das Modifikationsverfahren zum Modifizieren des Reduktionsberechnungsverfahrens schließt vorzugsweise zumindest einen Trainingsschritt zum Trainieren der künstlichen Intelligenz des Reduktionsermittlungssystems ein.

Besonders vorteilhaft ist es, wenn das Reduktionsberechnungsverfahren im Rahmen eines iterativen Optimierungsverfahrens, insbesondere eines Gradientenverfahrens, solange modifiziert wird, bis der Vergleich der Verlaufsangaben mit den zugeordneten Referenzangaben eine vorgegebene Mindestqualität des Reduktionsberechnungsverfahrens bestätigt.

Die Erfindung bezieht sich außerdem auf eine Reduktionsberechnungseinrichtung. Erfindungsgemäß ist bezüglich einer solchen Reduktionsberechnungseinrichtung vorgesehen, dass diese durch eine Recheneinrichtung gebildet ist, die derart programmiert ist, dass sie ein Reduktionsberechnungsverfahren wie oben beschrieben ausführen kann. Bezüglich der Vorteile der erfindungsgemäßen Reduktionsberechnungseinrichtung und deren vorteilhafter Ausgestaltungen sei auf die obigen Ausführungen im Zusammenhang mit dem erfindungsgemäßen Reduktionsberechnungsverfahren und dessen vorteilhafter Ausgestaltungen verwiesen.

Die Erfindung bezieht sich außerdem auf eine Modifikationseinrichtung. Erfindungsgemäß ist bezüglich einer solchen Modifikationseinrichtung vorgesehen, dass diese durch eine Recheneinrichtung gebildet ist, die derart programmiert ist, dass sie ein Modifikationsverfahren wie oben beschrieben ausführen kann. Bezüglich der Vorteile der erfindungsgemäßen Modifikationseinrichtung und deren vorteilhafter Ausgestaltungen sei auf die obigen Ausführungen im Zusammenhang mit dem erfindungsgemäßen Modifikationsverfahren und dessen vorteilhafter Ausgestaltungen verwiesen.

Die Erfindung bezieht sich außerdem auf ein Computerprogrammprodukt. Erfindungsgemäß ist bezüglich des Computerprogrammprodukts vorgesehen, dass dieses derart ausgestaltet ist, dass es bei Ausführung durch eine Recheneinrichtung diese veranlasst, ein Reduktionsberechnungsverfahren wie oben beschrieben und/oder ein Modifikationsverfahren wie oben beschrieben auszuführen.

Die Erfindung bezieht sich außerdem auf ein Fahrzeugsteuergerät für ein Schienenfahrzeug sowie auf ein Schienenfahrzeug als solches. Erfindungsgemäß ist diesbezüglich vorgesehen, dass das Fahrzeugsteuergerät bzw. das Schienenfahrzeug eine Reduktionsberechnungseinrichtung und/oder eine Modifikationseinrichtung und/oder ein Computerprogrammprodukt wie oben beschrieben umfasst.

Die Erfindung wird nachfolgend anhand von Ausführungsbeispielen näher erläutert; dabei zeigen beispielhaft
- Figur 1: ein Ausführungsbeispiel für eine erfindungsgemäße Reduktionsberechnungseinrichtung und eine erfindungsgemäße Modifikationseinrichtung,
- Figur 2: ein Ausführungsbeispiel für ein erfindungsgemäßes Schienenfahrzeug, das mit einer Reduktionsberechnungseinrichtung, beispielsweise einer Reduktionsberechnungseinrichtung gemäß den Figuren 1 oder 3 bis 6, und einer Modifikationseinrichtung, beispielsweise einer Modifikationseinrichtung gemäß den Figuren 1 oder 3 bis 6 ausgestattet ist, und
- Fig. 3-6: weitere Ausführungsbeispiele für erfindungsgemäße Reduktionsberechnungseinrichtungen und erfindungsgemäße Modifikationseinrichtungen.

In den Figuren werden der Übersicht halber für identische oder vergleichbare Komponenten dieselben Bezugszeichen verwendet.

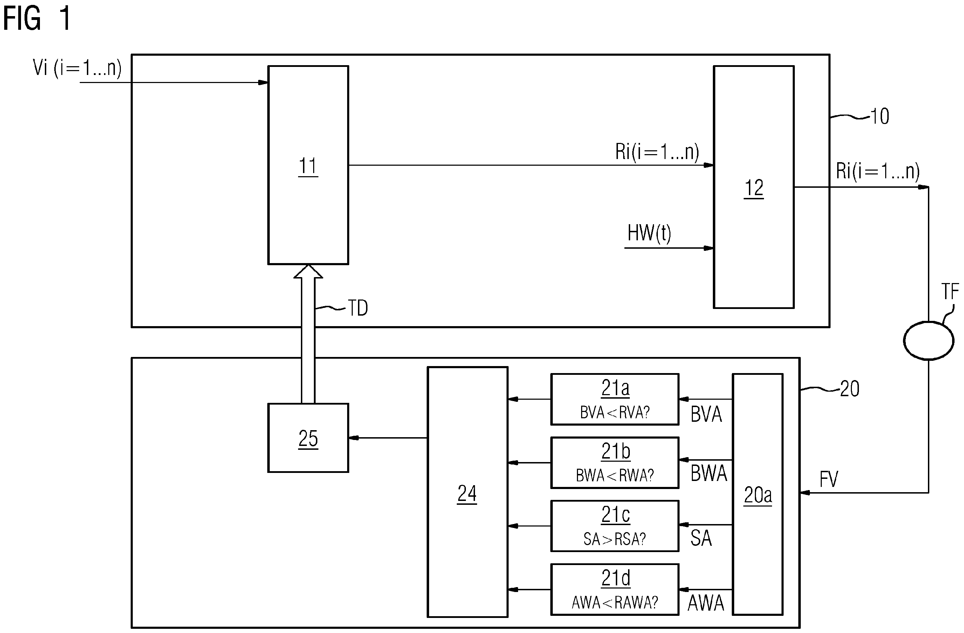

Die Figur 1 zeigt ein Ausführungsbeispiel für eine erfindungsgemäße Reduktionsberechnungseinrichtung 10.

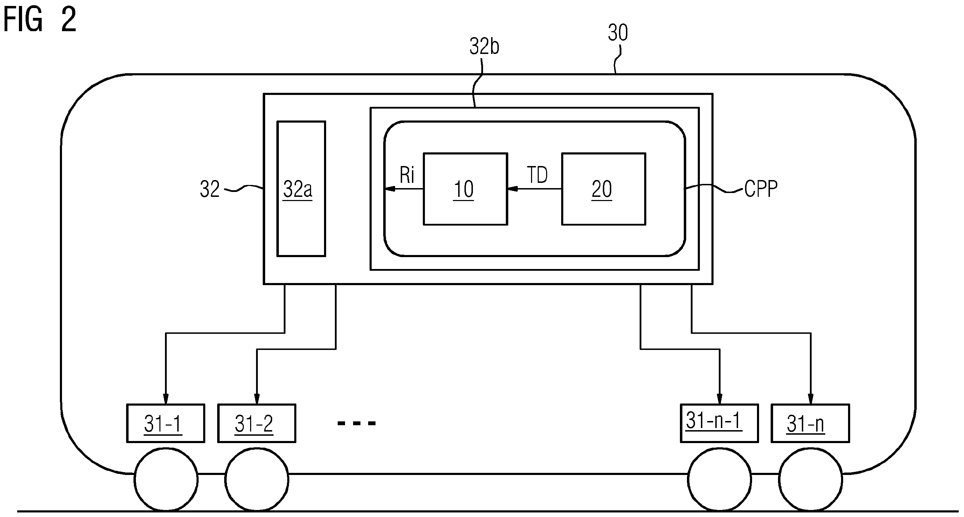

Ein Reduktionsermittlungssystem 11 der Reduktionsberechnungseinrichtung 10 dient dazu, für jede von "n" Brems- oder Antriebseinheiten 31-i (i=1...n) eines in der Figur 2 vereinfacht dargestellten, ein- oder mehrgliedrigen Schienenfahrzeugs 30 jeweils eine individuelle Reduktionsangabe Ri zu ermitteln, die eine gewünschte Kraftreduktion der jeweiligen Brems- oder Antriebskraft beschreibt, die von der jeweiligen i-ten Brems- oder Antriebseinheit 31-i des Schienenfahrzeugs 30 während eines realen oder simulierten Fahrbetriebs erzeugt wird.

Für die Ermittlung der Kraftreduktion der Brems- oder Antriebskraft der Brems- oder Antriebseinheiten 31-i bzw. der entsprechenden Reduktionsangaben Ri verarbeitet das Reduktionsermittlungssystem 11 für jede der Brems- oder Antriebseinheiten 31-i jeweils eine Achsdrehzahlangabe Vi, die die Achsdrehzahl und damit die aus dieser berechenbare sogenannte Achsgeschwindigkeit einer von der jeweiligen Brems- oder Antriebseinheit 31-i gebremsten oder angetriebenen Achse beschreibt.

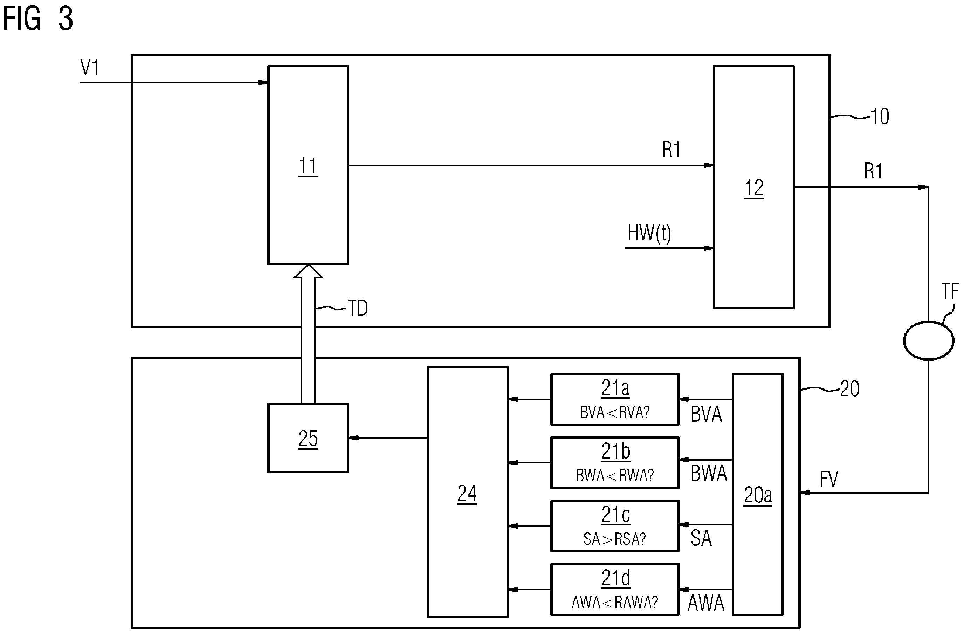

Prinzipiell ist es von Vorteil, wenn das Reduktionsermittlungssystem 11 die Reduktionsangabe Ri für jede der im Schienenfahrzeug 30 vorhandenen Brems- oder Antriebseinheiten 31-i (i=1...n) ermittelt, sodass n im Allgemeinen größer als Eins ist und der Anzahl aller Brems- oder Antriebseinheiten des Schienenfahrzeugs 30 entspricht; alternativ kann das von dem Reduktionsermittlungssystem 11 durchgeführte Reduktionsberechnungsverfahren auch nur für eine Teilmenge der Brems- oder Antriebseinheiten oder nur für eine einzige Brems- oder Antriebseinheit durchgeführt werden, wie beispielhaft die Figur 3 für den Fall n=1 zeigt.

Das Reduktionsermittlungssystem 11 wird durch ein angelerntes Computersystem künstlicher Intelligenz (KI) gebildet, das unter Heranziehung von Trainingsdaten TD in vorherigen Anlernschritten bzw. Trainingsschritten angelernt bzw. trainiert worden ist. Das Reduktionsermittlungssystem 11 kann beispielsweise auf einem neuronalen Netz beruhen bzw. ein solches umfassen.

Das Trainieren bzw. Anlernen des Reduktionsermittlungssystems 11 kann durch eine Anlern- bzw. Trainingseinrichtung 25 erfolgen, wie sie zum Trainieren künstlicher Intelligenz, insbesondere zum Trainieren neuronaler Netze, allgemein bekannt ist. Die Anlern- bzw. Trainingseinrichtung 25 bildet bei dem Ausführungsbeispiel gemäß Figur 1 einen Bestandteil einer Modifikationseinrichtung 20.

Die Reduktionsberechnungseinrichtung 10 umfasst außerdem eine Prüfeinrichtung 12, zu der die Reduktionsangaben Ri des Reduktionsermittlungssystems 11 gelangen. Durch die Prüfeinrichtung 12 wird in der Reduktionsberechnungseinrichtung 10 eine zumindest zweistufige Struktur geschaffen:
Eine erste Stufe wird durch das angelernte Reduktionsermittlungssystem 11 künstlicher Intelligenz gebildet, das anhand von Messwerten die Reduktionsangaben Ri errechnet. Das Anlernen von Systemen künstlicher Intelligenz auf der Basis von Trainingsdaten TD ist heutzutage allgemein bekannt, sodass auf die diesbezügliche Fachliteratur verwiesen sei.

Das Anlernen der ersten Stufe bzw. des Systems künstlicher Intelligenz erfolgt vorzugsweise anhand von Messwerten früherer Messschritte oder auf der Basis von Simulationsergebnissen. Die Genauigkeit bzw. die Sicherheit der von der ersten Stufe - nach Abschluss des Trainings - erzeugten Reduktionsangaben Ri kann jedoch unter Umständen über ein zulässiges Maß hinaus ungewiss oder sogar fehlerbehaftet sein, beispielsweise wenn in der Realität eine zuvor noch nicht ausreichend trainierte Rad-Schiene-Haftsituation auftritt.

Aus diesem Grunde ist vorzugsweise eine zweite Stufe in Form der Prüfeinrichtung 12 vorgesehen, die die Reduktionsangaben Ri der ersten Stufe auf Plausibilität prüft. Die zweite Stufe ermöglicht es somit, das Gesamtsystem bzw. die Reduktionsberechnungseinrichtung 10 insgesamt ohne großen Aufwand auf ein hohes Sicherheitsniveau bzw. höheres Sicherheitsniveau als ohne die Prüfeinrichtung 12 zu bringen.

Die Prüfeinrichtung 12 prüft die eingangsseitig anliegenden Reduktionsangaben Ri auf Plausibilität. Eine solche Plausibilitätsprüfung kann beispielsweise die Prüfung umfassen, ob die Reduktionsangaben Ri eine signifikante Kraftreduktion verlangen, obwohl gute Haftverhältnisse vorliegen und die Strecke trocken ist und aus diesem Grunde kein Anlass ersichtlich ist, die Brems- oder Antriebskraft erheblich zu erniedrigen.

Eine solche Plausibilitätsprüfung kann beispielsweise auf einer Haftwertangabe HW beruhen, die von einem externen, in den Figuren nicht gezeigten System bereitgestellt werden kann. Eine solche Haftwertangabe HW über der Zeit t kann quantitativ den aktuellen tatsächlichen Rad-Schiene-Kontakt bzw. die Haftreibung zwischen Rad und Schiene angeben oder in vereinfachter, beispielsweise binärer, Form lediglich die Angabe umfassen, ob eine gute Haftung vorliegt bzw. eine trockene Schiene befahren wird oder eben nicht.

Je nach dem Plausibilitätsergebnis kann die Prüfeinrichtung 12 die Reduktionsangaben Ri unverändert ausgeben, wenn sie plausibel sind, oder andernfalls korrigieren, beispielsweise um einen fest vorgegebenen Korrekturwert von zum Beispiel 50% reduzieren. Im letztgenannten Fall wird die Prüfeinrichtung 12 die entsprechend korrigierten bzw. reduzierten Reduktionsangaben Ri ausgeben.

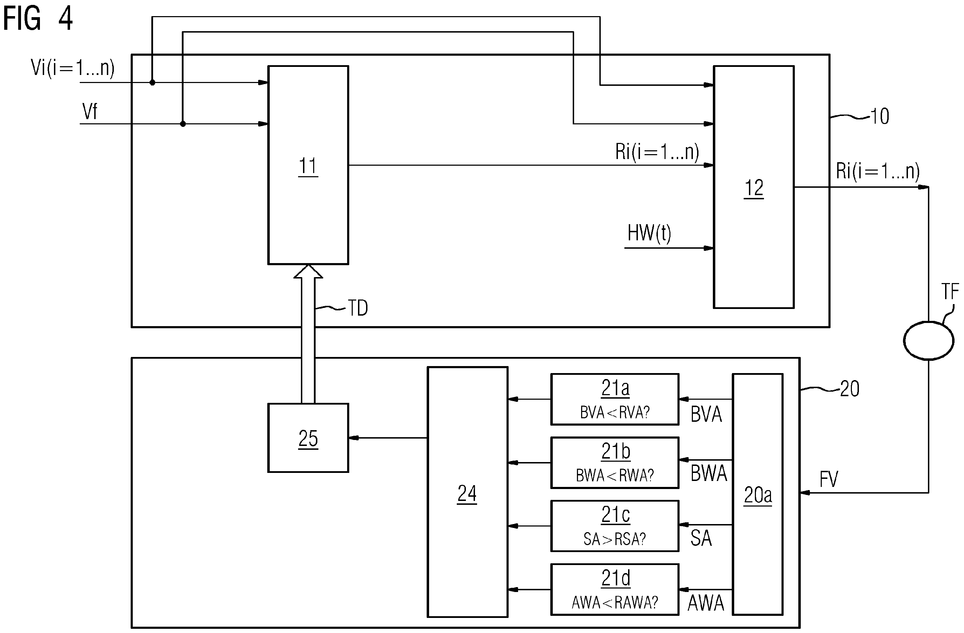

Alternativ oder zusätzlich kann vorgesehen sein, dass die Prüfeinrichtung 12 die Ausgabe der Reduktionsangaben Ri schlicht nur blockiert, wenn gute Haftwertbedingungen von au-ßen signalisiert werden, also wenn beispielsweise die Haftwertangabe HW eine gute Haftung anzeigt und/oder wenn alle Achsgeschwindigkeitsangaben mit der Fahrzeuggeschwindigkeit Vf übereinstimmen. Für die letztgenannte Variante ist es von Vorteil, wenn die Prüfeinrichtung 12 mit den Achsdrehzahlangaben Vi und falls verfügbar noch mit der Fahrzeuggeschwindigkeit Vf beaufschlagt wird, wie beispielhaft die Figuren 4 bis 6 zeigen.

Die von der Prüfeinrichtung 12 freigegebenen oder korrigierten Reduktionsangaben Ri können zur simulierten oder realen Steuerung des Schienenfahrzeugs 30 gemäß Figur 2 im Rahmen einer simulierten oder realen Testfahrt TF herangezogen werden, die einen Fahrverlauf FV über der Zeit t liefert.

Zum Zwecke des Trainierens des Reduktionsermittlungssystems 11 ist vorzugsweise eine Modifikationseinrichtung 20 vorgesehen.

Eine Vorverarbeitungseinheit 20a der Modifikationseinrichtung 20 dient dazu, den Fahrverlauf FV über der Zeit t hinsichtlich von Verlaufsangaben auszuwerten.

Handelt es sich bei dem auszuwertenden Fahrverlauf FV um einen Bremsvorgang, so können beispielsweise drei Verlaufsangaben gebildet werden, zum Beispiel eine erste in Form einer Bremswegverlängerungsangabe BVA, die eine simulierte oder real aufgetretene Bremswegverlängerung gegenüber einem Bremsweg bei trockener Schiene beschreibt, eine zweite in Form einer Bremswegangabe BWA, die den simulierten oder real aufgetretenen Bremsweg beschreibt, und eine dritte in Form einer vorzugsweise geschwindigkeitsabhängigen Radschlupfangabe SA, die etwaigen Radschlupf zwischen Rad und Schiene beschreibt.

Handelt es sich bei dem auszuwertenden Fahrverlauf FV um einen Beschleunigungsvorgang, so können beispielsweise zwei Verlaufsangaben gebildet werden, zum Beispiel eine in Form einer Beschleunigungsdauerangabe AWA, die die simulierte oder real aufgetretene Beschleunigungsdauer beschreibt, und eine in Form der bereits erwähnten Radschlupfangabe SA.

Bei dem Ausführungsbeispiel gemäß Figur 1 übt die Modifikationseinrichtung 20 zwei Funktionen aus:
Eine erste Funktion der Modifikationseinrichtung 20 besteht darin, sich selbst zu aktualisieren, indem sie Referenzangaben, die eine qualitative Bewertung der Arbeitsweise des Reduktionsermittlungssystems 11 anhand der simulierten oder gemessenen Fahrverläufe FV erlauben, aktualisiert bzw. optimiert, damit für diese qualitative Bewertung stets optimale Referenzangaben zur Verfügung stehen.

Als Referenzangaben werden vorzugsweise verarbeitet: eine Referenzverlängerungsangabe RVA für die Bremswegverlängerungsangabe BVA, eine Referenzbremswegangabe RWA für die Bremswegangabe BWA, eine Referenzschlupfangabe RSA für die Radschlupfangabe SA und eine Referenzbeschleunigungsdauerangabe RAWA für die Beschleunigungsdauerangabe AWA.

Die Entscheidung, ob ein Modifizieren des Modifikationsverfahrens erfolgen soll, hängt beispielsweise von den jeweils aktuellen Referenzangaben ab. Konkret kann beispielsweise eine Aktualisierung des Modifikationsverfahrens erfolgen, wenn eine der Verlaufsangaben ihre zugeordnete Referenzangabe qualitativ übertrifft, wobei die Aktualisierung erfolgt, indem die aktuelle Verlaufsangabe als neue Referenzangabe festgelegt wird.

Die Aktualisierung der Referenzangaben erfolgt mit Blick auf die Bremswegverlängerungsangabe BVA vorzugsweise, wenn - im Falle eines Bremsvorgangs - die aktuelle Bremswegverlängerungsangabe BVA (des aktuell betrachteten, simulierten oder gemessenen Fahrverlaufs FV) die Referenzverlängerungsangabe RVA unterschreitet, wobei die Aktualisierung erfolgt, indem die aktuelle Bremswegverlängerungsangabe BVA als neue Referenzverlängerungsangabe RVA festgelegt wird.

Die Aktualisierung der Referenzangaben erfolgt mit Blick auf die Referenzbremswegangabe RWA vorzugsweise, wenn - im Falle eines Bremsvorgangs - die aktuelle Bremswegangabe BWA (des aktuell betrachteten, simulierten oder gemessenen Fahrverlaufs FV) die Referenzbremswegangabe RWA unterschreitet, wobei die Aktualisierung erfolgt, indem die aktuelle Bremswegangabe BWA als neue Referenzbremswegangabe RWA festgelegt wird.

Die Aktualisierung der Referenzangaben erfolgt mit Blick auf die Referenzbeschleunigungsdauerangabe RAWA vorzugsweise, wenn - im Falle eines Beschleunigungsvorgangs - die aktuelle Beschleunigungsdauerangabe AWA (des aktuell betrachteten, simulierten oder gemessenen Fahrverlaufs FV) die Referenzbeschleunigungsdauerangabe RAWA unterschreitet, wobei die Aktualisierung erfolgt, indem die aktuelle Beschleunigungsdauerangabe AWA als neue Referenzbeschleunigungsdauerangabe RAWA festgelegt wird.

Die Aktualisierung der Referenzangaben erfolgt mit Blick auf die Referenzschlupfangabe RSA vorzugsweise, wenn - im Falle eines Beschleunigungs- oder Bremsvorgangs - die aktuelle Radschlupfangabe SA (des aktuell betrachteten, simulierten oder gemessenen Fahrverlaufs FV) die Referenzschlupfangabe RSA qualitativ (also bezüglich des erfolgreichen Einhaltens von Schlupfgrenzen) überschreitet, wobei die Aktualisierung erfolgt, indem die aktuelle Radschlupfangabe SA als neue Referenzschlupfangabe RSA festgelegt wird.

Die Entscheidung, ob eine Aktualisierung der Referenzangaben erfolgen soll, wird bei den Ausführungsbeispielen gemäß den Figuren 1 bis 6 vorzugsweise in Funktionsblöcken 21a bis 21d getroffen. Die Aktualisierung der Referenzangaben erfolgt vorzugsweise in einem Funktionsblock 24.

Eine zweite Funktion der Modifikationseinrichtung 20 besteht darin, das Reduktionsermittlungssystem 11 zu trainieren und zu aktualisieren bzw. weiter zu optimieren, wenn neue Fahrverläufe FV vorliegen, die ein "Nachtraining" ermöglichen, bzw. ein Vergleich der aktuellen Verlaufsangaben mit den zugeordneten Referenzangaben zeigt, dass das Reduktionsberechnungsverfahren aktuell eine vorgegebene Mindestqualität nicht erreicht hat.

Für die Modifikation bzw. das Anlernen und Training des Reduktionsermittlungssystems 11 der Reduktionsberechnungseinrichtung 10 führt die Anlern- bzw. Trainingseinrichtung 25 der Modifikationseinrichtung 20 vorzugsweise ein iteratives Optimierungsverfahren in Form eines KI-Trainingsverfahrens für das Reduktionsermittlungssystem 11 durch. Das Training des Reduktionsermittlungssystems 25 wird bei dem Ausführungsbeispiel gemäß den Figuren 1 bis 6 durch einen Funktionsblock 25 in Form einer Trainingseinrichtung für Systeme künstlicher Intelligenz innerhalb der Modifikationseinrichtung 20 ausgeführt.

Das Training erfolgt vorzugsweise im Rahmen eines iterativen Optimierungsverfahrens solange bzw. iterativ sooft, bis der Vergleich der Verlaufsangaben mit den zugeordneten Referenzangaben die vorgegebene Mindestqualität des Reduktionsberechnungsverfahrens bestätigt. Das iterative Optimierungsverfahren basiert vorzugsweise auf einem Gradientenverfahren, wie es im Bereich von Trainingsverfahren für Systeme künstlicher Intelligenz allgemein bekannt ist.

Die Mindestqualität des Reduktionsberechnungsverfahrens kann bezüglich des Bremsens beispielweise als erfüllt angesehen werden und das Reduktionsberechnungsverfahrens kann beispielsweise unverändert bleiben, wenn die aktuelle Bremswegverlängerungsangabe BVA die Referenzverlängerungsangabe RVA unterschreitet und die aktuelle Bremswegangabe BWA die Referenzbremswegangabe RWA unterschreitet und die aktuelle Radschlupfangabe SA die Referenzschlupfangabe RSA qualitativ überschreitet.

Die Mindestqualität des Reduktionsberechnungsverfahrens kann bezüglich des Beschleunigens beispielweise als erfüllt angesehen werden und das Reduktionsberechnungsverfahrens kann beispielsweise unverändert bleiben, wenn die aktuelle Beschleunigungsdauerangabe AWA die Referenzbeschleunigungsdauerangabe RAWA unterschreitet und die aktuelle Radschlupfangabe SA die Referenzschlupfangabe RSA qualitativ überschreitet. Zusätzlich kann auch berücksichtigt werden, dass die oder eine der Verlaufsangaben eine Beschleunigungsdauerverlängerungsangabe sein kann und eine simulierte oder real aufgetretene Beschleunigungsdauerverlängerung gegenüber einer gemessenen oder simulierten Beschleunigungsdauer bei trockener Schiene beschreiben kann und die oder eine der Referenzangaben eine Referenzbeschleunigungsdauerverlängerungsangabe sein kann; dies ist jedoch aus Gründen der Übersicht in den Figuren nicht explizit gezeigt.

Die Figur 4 zeigt ein weiteres Ausführungsbeispiel für das Reduktionsermittlungssystem 11 der Reduktionsberechnungseinrichtung 10. Bei dem Ausführungsbeispiel gemäß Figur 4 verarbeiten das Reduktionsermittlungssystem 11 und die Prüfeinrichtung 12 zusätzlich die Fahrzeuggeschwindigkeit Vf des Schienenfahrzeugs 30. Im Übrigen gelten die obigen Erläuterungen im Zusammenhang mit den Figuren 1 bis 3, insbesondere bezüglich des Trainings des Reduktionsermittlungssystems 11 im Rahmen eines iterativen Trainingsverfahrens, beispielsweise Gradientenverfahrens, für das Ausführungsbeispiel gemäß Figur 4 entsprechend.

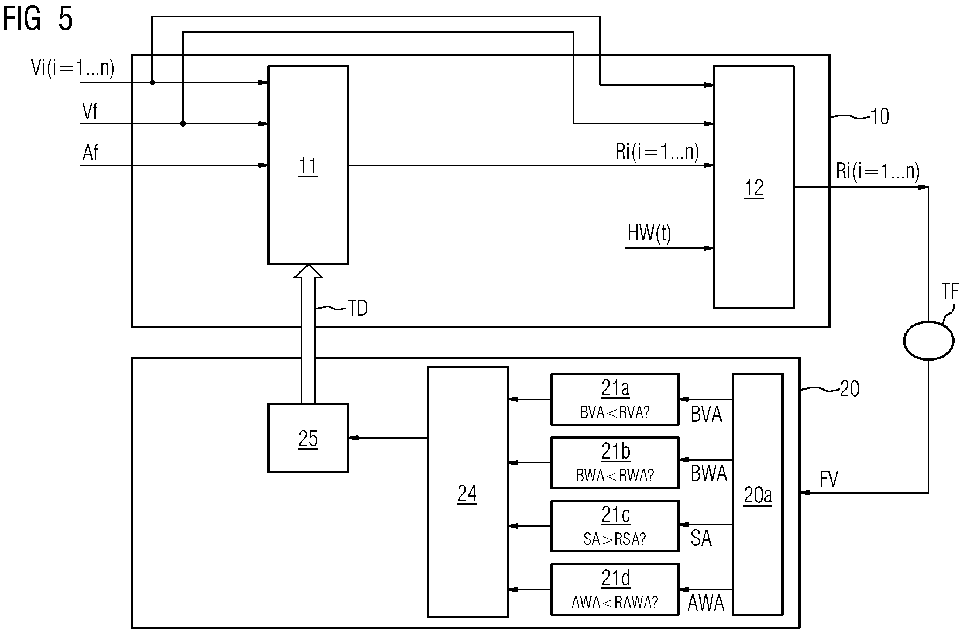

Die Figur 5 zeigt ein weiteres Ausführungsbeispiel für das Reduktionsermittlungssystem 11 der Reduktionsberechnungseinrichtung 10. Bei dem Ausführungsbeispiel gemäß Figur 5 verarbeitet das Reduktionsermittlungssystem 11 zusätzlich einen fahrzeugbezogenen Beschleunigungswert Af eines fahrzeugseitigen Beschleunigungssensors. Im Übrigen gelten die obigen Erläuterungen im Zusammenhang mit den Figuren 1 bis 4, insbesondere bezüglich des Trainings des Reduktionsermittlungssystems 11 im Rahmen eines iterativen Trainingsverfahrens, beispielsweise Gradientenverfahrens, für das Ausführungsbeispiel gemäß Figur 5 entsprechend.

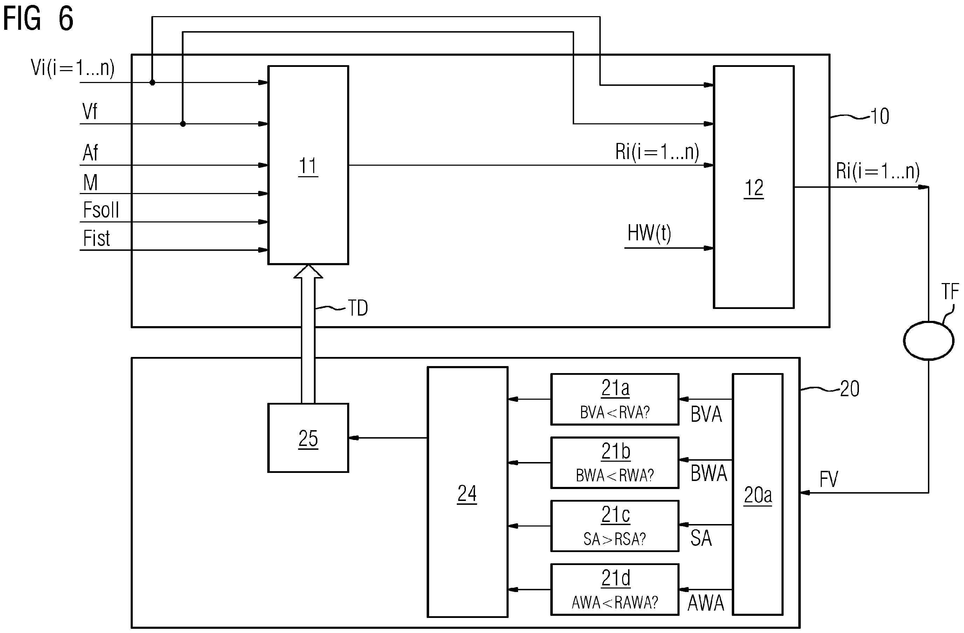

Die Figur 6 zeigt ein weiteres Ausführungsbeispiel für das Reduktionsermittlungssystem 11 der Reduktionsberechnungseinrichtung 10. Bei dem Ausführungsbeispiel gemäß Figur 6 verarbeitet das Reduktionsermittlungssystem 11 zusätzlich einen die Fahrzeugmasse angebenden Massewert M, eine dem Schienenfahrzeug seitens eines Fahrzeugsteuergeräts 32 (siehe Figur 2) vorgegebenen Sollgesamtbremskraftwert Fsoll und einen die tatsächliche Istgesamtbremskraft angebenden Istgesamtbremskraftwert Fist. Im Übrigen gelten die obigen Erläuterungen im Zusammenhang mit den Figuren 1 bis 5, insbesondere bezüglich des Trainings des Reduktionsermittlungssystems 11 im Rahmen eines iterativen Trainingsverfahrens, beispielsweise Gradientenverfahrens, für das Ausführungsbeispiel gemäß Figur 6 entsprechend.

Die Reduktionsberechnungseinrichtung 10 und die Modifikationseinrichtung 20, wie sie oben im Zusammenhang mit den Figuren 1 und 3 bis 6 erläutert wurden, sind vorzugsweise in einem Fahrzeugsteuergerät 32 (vgl. Figur 2), bei dem es sich beispielsweise um ein ATO-Fahrzeugsteuergerät zum autonomen Fahren handeln kann (typischerweise in Form eines Bremssteuergeräts oder einer Bremssteuerfunktionalität, das oder die einen Bestandteil des Fahrzeugsteuergeräts, insbesondere auch eines ATO-Fahrzeugsteuergeräts bildet), als Computerprogrammprodukt CPP integriert, das die Arbeitsweise einer Recheneinrichtung 32a des Fahrzeugsteuergeräts 32 steuern kann. Das Computerprogrammprodukt CPP kann in einem Speicher 32b des Fahrzeugsteuergeräts 32 gespeichert sein.

Die oben beschriebenen Ausführungsbeispiele können in vorteilhafter Weise einzelne oder mehrere der nachfolgend stichpunktartig aufgeführten Vorteile bzw. Eigenschaften aufweisen:
- Das oben beschriebene Reduktionsberechnungsverfahren kann in einen Gleit- und Schleuderschutz (GSS) integriert werden, der bekanntermaßen zu den komplexesten Funktionen in der Brems- bzw. Antriebssteuerung von Schienenfahrzeugen gehört. Dabei können bei schlechten Haftwertverhältnissen (z. B. nasser Schiene, Laub auf Schiene) durch Wegnehmen von Brems- bzw. Antriebskräften Radstillstände bzw. ein Durchdrehen der Räder vermieden werden, bei gleichzeitiger Erhaltung einer Mindestbrems- bzw. -Traktionskraft.
- Bei schlechten Haftwertverhältnissen können die Achsdrehzahlen je nach Witterungsbedingung teilweise sehr stark von der realen Fahrzeuggeschwindigkeit abweichen. Dadurch steht oft keine exakte Fahrzeuggeschwindigkeit zur Verfügung, um ein einfaches Regeln auf einen Schlupf zu ermöglichen. Auch ist es zur Minimierung beispielsweise der Bremswegverlängerung auch nicht immer zielführend, auf einen festen Schlupf zu regeln, sondern es sollte der Schlupf gefunden werden, bei welchem abhängig von den temporär vorliegenden Schienenverhältnissen die maximale Haftwertausnutzung möglich ist. Den genannten Aspekten lässt sich mit den oben beschriebenen Reduktionsberechnungsverfahren aufgrund des Einsatzes künstlicher Intelligenz in einfacher Weise Rechnung tragen.
- Bei aktuellen Schienenfahrzeugen wird ein in der Regel sehr komplexer Regler bzw. Algorithmus für den Gleit- und Schleuderschutz eingesetzt. Ausnahmefälle bzw. besondere Szenarien müssen aufwändig als gesonderte Funktionen bzw. Korrekturen implementiert werden. Hierfür ist ein sehr tiefes Expertenwissen nötig, um solche Algorithmen zu pflegen, zu erweitern, ggf. zu verbessern und Fehler zu suchen. Die Fülle an möglichen Signalverläufen der Achsdrehzahlen bei schlechten Haftwertbedingungen macht es schwer, in einem manuell implementierten Algorithmus alle Fälle abzudecken und passend zu implementieren. Um dies zu vermeiden, setzt das oben beschriebene Reduktionsberechnungsverfahren künstliche Intelligenz ein, wodurch sich in einfacher Weise sehr gute Ergebnisse erzielen lassen.
- Bei dem oben beschriebenen Reduktionsberechnungsverfahren kann mittels künstlicher Intelligenz (KI) und Maschine Learning z. B. mittels eines neuronalen Netzes, die Reduktion der Brems- bzw. Traktionskraft durch den Gleit- und Schleuderschutz (GSS) ermittelt werden. Der KI können als Eingangsgrößen die Achsdrehzahlen oder Achsgeschwindigkeiten und ggf. noch weitere Signale wie z. B. ein Beschleunigungssignal übergeben werden. Aus diesen Messwerten zzgl. deren Zeitverlauf in der Vergangenheit kann die KI die nötige Kraftreduktion ermitteln. Die KI kann bei realen Fahrten und/oder mit Simulationen im Labor trainiert werden. Bei Simulationen kann dazu ein möglichst realitätsnahes Haftwertmodell des Rad/Schiene-Kontaktes verwendet werden, um auch in der Realität gute Ergebnisse zu erzielen. Möglich wäre es, die KI anhand von Simulationen zu trainieren, bis ein akzeptables Niveau erreicht ist und dann mit realen Messfahrten die KI zu optimieren.
- Die Kriterien für das Training können eine möglichst geringe Erhöhung der Beschleunigungsdauer bzw. Bremswegverlängerung des Fahrzeugs unter Vermeidung des Durchdrehens von Rädern oder von Radstillständen sein. Für den Bremsweg werden vorzugsweise zusätzlich als Mindestkriterien die Vorgaben aus den Gleitschutznormen (EN15595, UIC 541-05) für das Training verwendet.
- Aus technischer und womöglich auch aus Sicherheitssicht denkbar wäre auch, die KI im Betrieb immer weiter lernen zu lassen, indem die o. g. Trainingskriterien bei jeder Bremsung oder Beschleunigung ermittelt (mit vorhandenen Messsignalen möglich) und ausgewertet werden; zum Beispiel unter Zuhilfenahme einer aus zugweiten Größen ermittelten, aber nicht immer verfügbaren Fahrzeuggeschwindigkeit. Damit könnte die KI im Betrieb weiter verbessert werden. Ansonsten kann die KI im Labor und auf Messfahrten trainiert werden, und es kann das fertig trainierte Netz dann in die Steuerung integriert werden, sodass das Verhalten der Steuerung reproduzierbar bleibt.
- Unter Einbeziehung weiterer im Zug/Wagen/Fahrzeug verfügbarer Messgrößen wie die Beladung, die Bremskraft und/oder die Soll-Verzögerung kann die KI ebenfalls weiter verbessert werden. Denkbar wäre auch, eine vorab berechnete bzw. geschätzte Fahrzeuggeschwindigkeitsangabe als Eingangsgrö-ße zu berücksichtigen; eine solche geschätzte Fahrzeuggeschwindigkeitsangabe kann ebenfalls auf KI-Basis ermittelt werden.
- Vorteile der oben beschriebenen Reduktionsberechnungsverfahren können sein:
   1. Es kann durch die Nutzung einer künstlichen Intelligenz bei gleichen Eingangsgrößen das Verhalten des Gleit- und Schleuderschutzes verbessert werden, da durch die KI neue noch unbekannte oder schwer zu implementierende Strategien zur Kraftreduktion gefunden und umgesetzt werden können.
   2. Insbesondere durch das automatisierte Training der KI kann eine Vielzahl unterschiedlicher und ggf. neu hinzukommender Szenarien berücksichtigt werden. Der bei aktuellen Lösungen teilweise große Aufwand, mit hohem Expertenwissen (nachträglich) zusätzliche Szenarien bzw. Signalverläufe im Algorithmus zu berücksichtigen, fällt damit weg.

Abschließend sei erwähnt, dass die Merkmale aller oben beschriebenen Ausführungsbeispiele untereinander in beliebiger Weise kombiniert werden können, um weitere andere Ausführungsbeispiele der Erfindung zu bilden.

Auch können alle Merkmale von Unteransprüchen jeweils für sich mit jedem der nebengeordneten Ansprüche kombiniert werden, und zwar jeweils für sich allein oder in beliebiger Kombination mit einem oder mehreren anderen Unteransprüchen, um weitere andere Ausführungsbeispiele zu erhalten.

## Patentansprüche

1. Reduktionsberechnungsverfahren zum Ermitteln einer Reduktionsangabe (Ri), die eine einzustellende Kraftreduktion der Brems- oder Antriebskraft einer Brems- oder Antriebseinheit (31-i) eines Schienenfahrzeugs (30) während eines realen oder simulierten Fahrbetriebs beschreibt,
**dadurch gekennzeichnet, dass**
- die Ermittlung der Reduktionsangabe (Ri) von einem angelernten Reduktionsermittlungssystem (11) künstlicher Intelligenz durchgeführt wird, das während des realen oder simulierten Fahrbetriebs die Reduktionsangabe (Ri) zumindest unter Einbezug des zeitlichen Verlaufs einer Achsdrehzahlangabe (Vi), die die Achsdrehzahl einer Achse, die von der jeweiligen Brems- oder Antriebseinheit (31-i) gebremst oder angetrieben wird, beschreibt,
- wobei das Reduktionsermittlungssystem (11) künstlicher Intelligenz unter Heranziehung simulierter und/oder gemessener Fahrverläufe (FV) und zugehöriger Achsdrehzahlverläufe trainiert worden ist.

2. Reduktionsberechnungsverfahren nach Anspruch 1,
**dadurch gekennzeichnet, dass**
- das Reduktionsermittlungssystem (11) künstlicher Intelligenz trainiert worden ist unter der Maßgabe, dass bei einem Bremsvorgang eine Bremswegverlängerung des Schienenfahrzeugs (30), verglichen mit einem gemessenen oder simulierten Bremsweg bei trockener Schiene, einen vorgegebenen bremsbezogenen Verlängerungsmaximalwert unterschreitet.

3. Reduktionsberechnungsverfahren nach einem der voranstehenden Ansprüche,
**dadurch gekennzeichnet, dass**
- das Reduktionsermittlungssystem (11) künstlicher Intelligenz trainiert worden ist unter der Maßgabe, dass bei einem Beschleunigungsvorgang eine Verlängerung der Beschleunigungsdauer des Schienenfahrzeugs (30), verglichen mit einer gemessenen oder simulierten Beschleunigungsdauer bei trockener Schiene, eine vorgegebene beschleunigungsbezogene Maximaldauer unterschreitet.

4. Reduktionsberechnungsverfahren nach einem der voranstehenden Ansprüche,
**dadurch gekennzeichnet, dass**
- das Reduktionsermittlungssystem (11) künstlicher Intelligenz trainiert worden ist unter der Maßgabe, dass ein vorgegebener, vorzugsweise geschwindigkeitsabhängiger, Radschlupf unterschritten wird und/oder
- das Reduktionsermittlungssystem (11) künstlicher Intelligenz unter weiterer Heranziehung der Fahrzeuggeschwindigkeit des Schienenfahrzeugs (30) während der simulierten und/oder gemessenen Fahrverläufe (FV) trainiert worden ist und die Ermittlung der Reduktionsangabe (Ri) unter Einbezug des zeitlichen Verlaufs der aktuellen Fahrzeuggeschwindigkeit erfolgt.

5. Reduktionsberechnungsverfahren nach einem der voranstehenden Ansprüche,
**dadurch gekennzeichnet, dass**
- dem angelernten Reduktionsermittlungssystem (11) eine Prüfeinrichtung (12) nachgeordnet ist, die die ermittelte Reduktionsangabe (Ri) einer Plausibilitätsprüfung unterwirft,
- wobei die Prüfeinrichtung (12) die Reduktionsangabe (Ri) unverändert ausgibt, wenn diese die Plausibilitätsprüfung besteht, und andernfalls die Reduktionsangabe (Ri) korrigiert und eine korrigierte Reduktionsangabe (Ri) ausgibt oder die Ausgabe der Reduktionsangabe (Ri) blockiert.

6. Reduktionsberechnungsverfahren nach einem der voranstehenden Ansprüche,
**dadurch gekennzeichnet, dass** dem angelernten Reduktionsermittlungssystem (11) eine Prüfeinrichtung (12) nachgeordnet ist, die die Ausgabe der Reduktionsangabe (Ri) blockiert, wenn gute Haftwertbedingungen erkannt werden und/oder wenn alle Achsen dieselbe Fahrzeuggeschwindigkeit anzeigen oder mit einer anderweitig ermittelten Fahrzeuggeschwindigkeit übereinstimmen.

7. Modifikationsverfahren zum Modifizieren eines Reduktionsberechnungsverfahrens nach einem der voranstehenden Ansprüche,
**dadurch gekennzeichnet, dass**
- ein Fahrverlauf (FV), der auf der Basis einer Reduktionsangabe (Ri), die nach einem Reduktionsberechnungsverfahren nach einem der voranstehenden Ansprüche ermittelt worden ist, simuliert oder real durchgeführt worden ist, hinsichtlich zumindest einer Verlaufsangabe ausgewertet wird,
- die zumindest eine Verlaufsangabe mit einer zugeordneten Referenzangabe verglichen wird und
- in Abhängigkeit vom Ergebnis des Vergleichs das Reduktionsberechnungsverfahren und/oder das Modifikationsverfahren modifiziert wird oder eine Modifikation unterbleibt.

8. Modifikationsverfahren nach Anspruch 7,
**dadurch gekennzeichnet, dass** der Fahrverlauf (FV) ein Bremsverlauf ist, wobei
- die oder eine der Verlaufsangaben eine Bremswegverlängerungsangabe (BVA) ist und eine simulierte oder real aufgetretene Bremswegverlängerung gegenüber einem gemessenen oder simulierten Bremsweg bei trockener Schiene beschreibt und die oder eine der Referenzangaben eine Referenzverlängerungsangabe (RVA) ist, und/oder
- die oder eine der Verlaufsangaben eine Bremswegangabe (BWA) ist und den simulierten oder real aufgetretenen Bremsweg beschreibt und die oder eine der Referenzangaben eine Referenzbremswegangabe (RWA) ist, und/oder
- die oder eine der Verlaufsangaben eine, vorzugsweise geschwindigkeitsabhängige, Radschlupfangabe (SA) ist und die oder eine der Referenzangaben eine, vorzugsweise geschwindigkeitsabhängige, Referenzradschlupfangabe (RSA) ist.

9. Modifikationsverfahren nach einem der voranstehenden Ansprüche 7 bis 8,
**dadurch gekennzeichnet, dass** der Fahrverlauf (FV) ein Beschleunigungsverlauf ist, wobei
- die oder eine der Verlaufsangaben eine Beschleunigungsdauerangabe (AWA) ist und die simulierte oder real aufgetretene Beschleunigungsdauer beschreibt und die oder eine der Referenzangaben eine Referenzbeschleunigungsdauerangabe (RWA) ist und/oder
- die oder eine der Verlaufsangaben eine Beschleunigungsdauerverlängerungsangabe ist und eine simulierte oder real aufgetretene Beschleunigungsdauerverlängerung gegenüber einer gemessenen oder simulierten Beschleunigungsdauer bei trockener Schiene beschreibt und die oder eine der Referenzangaben eine Referenzbeschleunigungsdauerverlängerungsangabe und/oder
- die oder eine der Verlaufsangaben eine vorzugsweise geschwindigkeitsabhängige Radschlupfangabe (SA) ist und die oder eine der Referenzangaben eine, vorzugsweise geschwindigkeitsabhängige, Referenzradschlupfangabe (RSA) ist.

10. Modifikationsverfahren nach einem der voranstehenden Ansprüche 7 bis 9,
**dadurch gekennzeichnet, dass**
- eine Aktualisierung des Modifikationsverfahrens erfolgt, wenn eine der Verlaufsangaben ihre zugeordnete Referenzangabe qualitativ übertrifft,
- wobei die Aktualisierung erfolgt, indem die aktuelle Verlaufsangabe als neue Referenzangabe festgelegt wird.

11. Modifikationsverfahren nach einem der voranstehenden Ansprüche 7 bis 10,
**dadurch gekennzeichnet, dass** das Modifikationsverfahren zum Modifizieren des Reduktionsberechnungsverfahrens zumindest einen Trainingsschritt zum Trainieren der künstlichen Intelligenz (KI) des Reduktionsermittlungssystems (11) einschließt.

12. Modifikationsverfahren nach einem der voranstehenden Ansprüche 7 bis 11,
**dadurch gekennzeichnet, dass** das Reduktionsberechnungsverfahren im Rahmen eines iterativen Optimierungsverfahrens, insbesondere eines Gradientenverfahrens, solange modifiziert wird, bis der Vergleich der Verlaufsangaben mit den zugeordneten Referenzangaben eine vorgegebene Mindestqualität des Reduktionsberechnungsverfahrens bestätigt.

13. Reduktionsberechnungseinrichtung (10),
**dadurch gekennzeichnet, dass** diese durch eine Recheneinrichtung (32a) gebildet ist, die derart programmiert ist, dass sie ein Reduktionsberechnungsverfahren nach einem der voranstehenden Ansprüche 1 bis 6 ausführen kann.

14. Modifikationseinrichtung (20),
**dadurch gekennzeichnet, dass** diese durch eine Recheneinrichtung (32a) gebildet ist, die derart programmiert ist, dass sie ein Modifikationsverfahren nach einem der voranstehenden Ansprüche 7 bis 12 ausführen kann.

15. Computerprogrammprodukt,
**dadurch gekennzeichnet, dass** das Computerprogrammprodukt (CPP) bei Ausführung durch eine Recheneinrichtung (32a) diese veranlasst, ein Reduktionsberechnungsverfahren nach einem der voranstehenden Ansprüche 1 bis 6 und/oder ein Modifikationsverfahren nach einem der voranstehenden Ansprüche 7 bis 12 auszuführen.

16. Fahrzeugsteuergerät (32) für ein Schienenfahrzeug (30),
**dadurch gekennzeichnet, dass** das Fahrzeugsteuergerät (32) eine Reduktionsberechnungseinrichtung (10) nach Anspruch 13 und/oder eine Modifikationseinrichtung (20) nach Anspruch 14 und/oder ein Computerprogrammprodukt nach Anspruch 15 umfasst.
